# EUROPEAN PATENT APPLICATION

(11) **EP 1 605 489 A2**
(43) Date of publication of application: **14.12.2005**
(21) Application number: 04028326.9
(22) Date of filing: 30.11.2004
(51) Int. Cl.: H01J 1/304, H01J 9/02, H01J 19/24

(54) **Field electron emission device and lighting device**

(30) Priority: 10.06.2004 JP 2004172660; 04.08.2004 JP 2004227781
(71) Applicant: Dialight Japan Co.,Ltd., Toyonaka-shi Osaka 561-0885 (JP)
(72) Inventor: Hiraki, Akio, Takarazuka-shi Hyogo, 665-0882 (JP); Haba, Masanori, Machida-shi Tokyo 195-0061 (JP)
(74) Representative: TER MEER - STEINMEISTER & PARTNER GbR

(57) **Abstract**

This field electron emission device comprises a linear conductor wire having concave/convex on its surface and an electron emitter having electron conductivity formed on the concave/convex surface of the conductor wire. Preferably, the concave/convex is formed by a channeling performed to the surface of the conductor wire. Preferably, the electron emitter is composed of microscopic linear materials composed of selected one or combination of carbon nano-tube, carbon nano-wall, carbon fiber, graphite fiber, amorphous carbon fiber and diamond fiber.

## Description

### BACKGROUND OF THE INVENTION

The present invention relates to a field electron emission device and a lighting device, and more particularly to a field electron emission device that can be applied to a lighting source such as a high intensity lamp or an electron beam emission source such as a thin-sized display, and a lighting device provided with the field electron emission device.

There has already been proposed a lighting device wherein electrons are emitted toward an anode from a great number of electron emitters provided at a field electron emission device (cathode) and the emitted electrons are caused to collide with a phosphor material coated on the anode as they are accelerated at high speed, whereby the phosphor material is emitted by its electron impact, the emission of the phosphor material being used as illumination light. The lighting device of this type can be applied to a surface light source having a flat light-emitting surface such as a flat display, when considering electron emission manner of the field electron emission device, but there is a technical subject that should be solved upon applying the lighting device of this type to a linear light source type having a general linear light- emitting surface such as a straight tube type lighting device.

### SUMMARY OF THE INVENTION

A field electron emission device according to the present invention is characterized by comprising a linear conductor wire having a concave/convex on its surface and an electron emitter formed on the concave/convex surface of the conductor wire and having electron conductivity.

According to the invention, providing the concave/convex along the longitudinal direction of the surface of the linear conductor wire promotes a generation of production cores of the electron emitter, compared to a conductor wire having a flat surface upon forming the electron emitter having electron conductivity, whereby the generated production cores of the electron emitter coalescently grow to form the electron emitter, resulting in being capable of forming the electron emitter into a line shape. Moreover, more greater electric field concentration is caused at the leading end of the electron emitter formed on the projecting convex section, whereby the electron emission is remarkably promoted to enable lower-voltage driving than the conventional one. In this case, a great number of convex sections are formed along the linear conductor wire, so that the electron emission amount can be equaled over the whole conductor wire. Therefore, the electron emission density can also be increased, thereby being more suitable for the application to a lighting device requiring high intensity.

The above-mentioned "linear" is not limited to a straight line shape, but includes a linear shape wherein a curved line and straight line are mixed, such as a spiral shape and wave-like shape.

It does not matter whether the above-mentioned "conductor wire" has a solid-core or is hollow. Further, its sectional shape is not particularly limited. Specifically, its sectional shape is not limited to a circle, butmaybe an ellipse, rectangle or other shape.

The above-mentioned "concave/convex" means that the surface of the conductor wire is not flat. For example, it means that the surface has a concave/convex by a projection, recess or groove.

The above-mentioned "conductor wire" may have the concave/convex all over its surface or may partially have the concave/convex on its surface.

The outer diameter of the conductor wire is suitably selected depending upon its use. It is preferably within approximately 0.5 to 2 mm, more preferably within approximately 1 mm due to a wire processing. Further, the ratio of the height of the concave/convex to the outer diameter of the conductor wire is preferably about 0.5 to M1 (JIS fine thread) to the conductor wire of 1-mm diameter, more preferably about M1 (JIS fine thread) to the conductor wire of 1-mm diameter, for example, due to the film-forming condition.

It is preferable that the electron emitter having the electron conductivity is made of a carbon-based material, for example, carbon nano-tube, carbon nano-wall, diamond-like carbon, graphite, fullerene or the like, since these materials can emit electrons with relatively low electric field.

Moreover, the present invention does not limit the shape of the aforesaid convex/concave. For example, the concave/convex can be formed by a channeling such as a threading. A valley and mountain of the screw that is the concave/convex has relatively a sharp shape according to this processingmanner, so that the generation of cores is further promoted upon forming the electron emitter. Further, the electric field is concentrated on the leading end of the electron emitter formed on the sharp mountain of the screw, thereby further promoting the electron emission.

The concave/convex may be formed by setting the surface roughness of the conductor wire. Examples of the surface roughness include the roughness of a processing pitch upon machining the conductor wire with a grinding or turning, or the surface roughness when the surface of the conductor wire is chemically treated to obtain a desired surface roughness.

Moreover, the field electron emission device of the present invention includes a conductor wire of a catalytic metal, among plural intertwined conductor wires, that becomes a catalyst for forming the electron emitter, and the electron emitter having the electron conductivity may be formed on the conductor wire of the catalytic metal. Although the catalytic metal applied in the present invention is not particularly limited, it is preferably at least any one of Ni, Fe and Co. Although it is preferable that the conductor wire of the catalytic metal is made such that the conductor wire itself is composed of the catalytic metal, the conductor wire itself may not be the catalytic metal but the other metal and the catalytic metal may be formed on the surface of this conductor wire.

According to the present invention, the conductor wires are intertwined, so that the conductor wire of the catalytic metal has a concave/convex shape. The electron emitter is formed on the conductor wire of the catalytic metal, whereby more greater electric field concentration is caused on the leading end of the electron emitter, thereby further promoting the electron emission. Accordingly, the present invention is more suitable for the application to a lighting device requiring high intensity.

In the manufacture of the field electron emission device of the present invention, it is preferable that the electron emitter is made of a carbon-based microscopic linear material such as a carbon nano-tube or carbon nano-wall. The microscopic linear material is preferably formed by, for example, a DC plasma CVD method that can supply high energy to a plasma space.

In another manufacture of the field electron emission device of the present invention, a channeling is performed to the linear conductor wire, and the electron emitter having the electron conductivity is formed on the linear conductor wire that is subjected to the channeling. The channeling may form a channel all over the conductor wire or on a part of the conductor wire, or may form a thread groove. It should be noted that a catalytic metal layer that is a catalyst for forming the electron emitter on the linear conductor wire can preferably be formed before the channeling. In this case, the catalytic metal layer is present on the surface of the convex section other than the groove, with the result that the electron emitter can selectively be formed on the convex section other than the groove.

In the lighting device of the present invention, a vacuum envelope preferably has a longitudinal shape, wherein a metallic bar is accommodated and arranged in the longitudinal direction and the field electron emission device is preferably arranged so as to oppose to the metallic bar along the longitudinal direction.

### BRIEF DESCRIPTION OF THE DRAWINGS

Fig. 1 is a perspective view of a lighting device provided with a field electron emission device (linear cathode) according to an embodiment of the present invention;
Fig. 2 is a vertical side view of Fig. 1;
Fig. 3 is a sectional view taken along a line A - A in Fig. 2;
Fig. 4 is an enlarged perspective view of the linear cathode of Fig. 1;
Fig. 5 is a schematic constructional view of a DC plasma CVD device;
Fig. 6 is a partially enlarged sectional view of the linear cathode of Fig. 1;
Fig. 7 is a partially enlarged sectional view of the linear cathode;
Fig. 8A is a sectional view for explaining a manufacturing process of the linear cathode;
Fig. 8B is a sectional view for explaining a manufacturing process with respect to the process shown in Fig. 8A;
Fig. 9 is an enlargedperspective view of a modified example of the linear cathode;
Fig. 10 is a partially enlarged sectional view of still another modified example of the linear cathode;
Fig. 11A is a sectional view for explaining a manufacturing process of the linear cathode of Fig. 10;
Fig. 11B is a sectional view for explaining a manufacturing process of the linear cathode of Fig. 10;
Fig. 12 is a perspective view showing another modified example of the linear cathode;
Fig. 13 is a partially enlarged perspective view of the linear cathode of Fig. 12;
Fig. 14 is a partially enlarged sectional view of the linear cathode of Fig. 12;
Fig. 15 is a partially enlarged sectional view of another linear cathode;
Fig. 16A is a sectional view showing still another modified example of the linear cathode;
Fig. 16B is a sectional view showing still another modified example of the linear cathode;
Fig. 17A is a sectional view showing still another modified example of the linear cathode;
Fig. 17B is a sectional view showing still another modified example of the linear cathode;
Fig. 18A is a sectional view showing still another modified example of the linear cathode;
Figs 18B, 18C are sectional views showing still another modified example of the linear cathode;
Fig. 19A is a sectional view showing still another modified example of the linear cathode; and
Fig. 19B is a sectional view showing still another modified example of the linear cathode.

### DETAILED DESCRIPTION OF THE PREFERRED EMBODIMENTS OF THE INVENTION

The embodiments of the present invention will be explained in detail hereinafter with reference to the attached drawings.

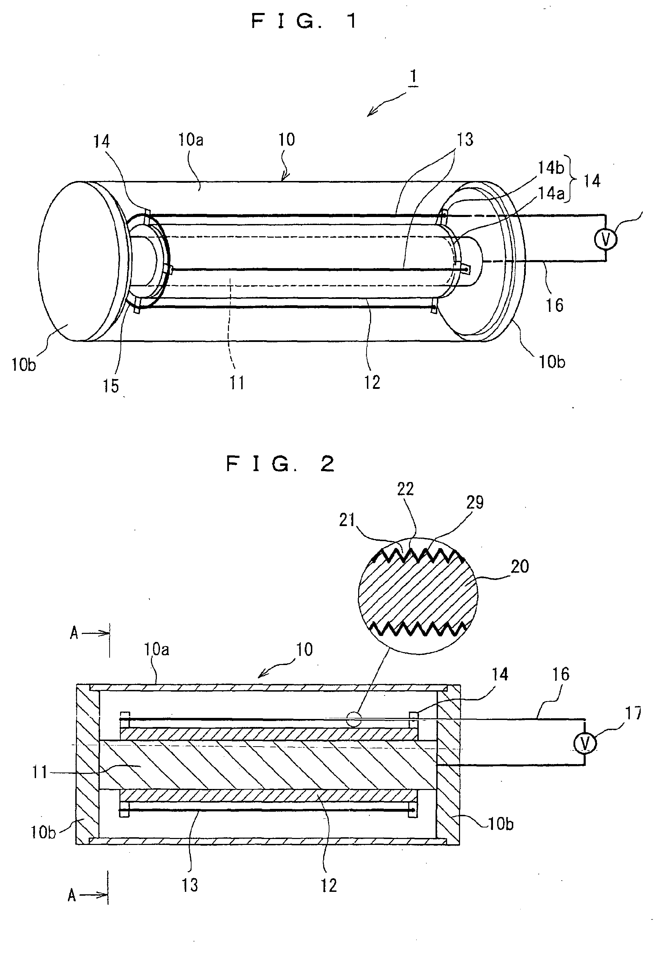

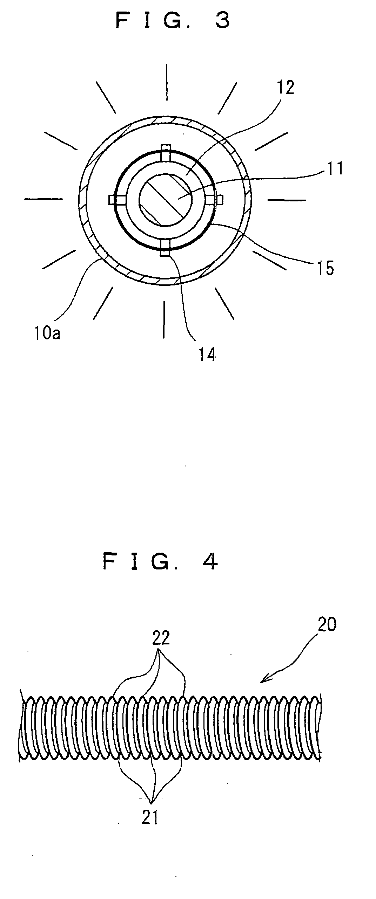

Fig. 1 is a perspective view of a lighting device provided with a field electron emission device (linear cathode) according to the embodiment of the present invention, Fig. 2 is a vertical side view of this lighting device and Fig. 3 is a sectional view taken along a line A - A in Fig. 2.

With reference to these drawings, the lighting device 1 has a vacuum envelope 10 having an appearance of a longitudinal straight tube shape extending in one direction, wherein its inside is airtight that means it is vacuum or generally vacuum. The vacuum envelope 10 is composed of a straight tube type glass tube 10a and disc-like cover members 10b, 10b that seal the openings at both ends of the straight tube type glass tube 10a. Although the vacuum envelope 10 is made of a glass material, any materials that can transmit or semi-transmit emitted light or can transmit emitted light with required transmittancy can be used. The configuration other than that of this embodiment includes a glass tube, both ends of which are closed or one end of which is closed with both or one of the disc-like cover members 10b, 10b omitted.

Arranged in the glass tube 10a is a phosphor-coated anode 11 whose both ends are fixed to the disc-like cover members 10b, 10b and that has a circular sectional shape provided with a phosphor 12 on its outer peripheral surface. Linear cathodes (field electron emission devices) 13 are arranged so as to surround the phosphor-coated anode 11. The phosphor-coated anode 11 has a solid structure, but itmay have a hollow structure. Further, the material of the phosphor-coated anode 11 is not particularly limited. For example, it may be made of aluminum, copper, Ni, SUS or the like. Moreover, a mirror finish is made on the surface of the phosphor-coated anode 11 that is excellent in adhesivity of the phosphor 12 and reflectivity of light emission from the phosphor 12. Although the formation of the phosphor 12 is not particularly limited, the phosphor 12 can be formed by spray painting of the phosphor or adherence of a sheet-like phosphor. The material of the phosphor 12 is not particularly limited so long as it can emit light by electron impact. The outer peripheral surface of the phosphor 12 serves as a light-emitting surface. Examples of the material of the phosphor 12 include a white phosphor material, green phosphor material, blue phosphor material, red phosphor material or the like, which can suitably be selected or combined according to the lighting color. The phosphor 12 may be a single color or plural colors.

Each of the linear cathodes 13 serving as a field electron emission device is composed of a linear conductor wire 20 and an electron emitter 29. The conductor wire 20 has its longitudinal direction along the inside of the glass tube 10a and has concave sections 21 and convex section 22 formed alternately on its surface in the longitudinal direction. Although not particularly limited, the outer diameter of the linear cathode 13 is about 1 mm. The electron emitter 29 has electron conductivity. The technique for forming the concave sections 21 and convex section 22 on the surface of the conductor wire 20 is not particularly limited. For example, they are formed by performing a threading process to the conductor wire 20. The electron emission manner of the electron emitter 29 is not particularly limited. The electron emitter 29 is preferably made of carbon-based microscopic linear materials such as a carbon nano-tube or carbon nano-wall. The shape of the linear cathode 13 is not particularly limited. It can be matched to the linear shape or curved shape of the grass tube 10a.

Plural linear cathodes 13 are arranged in the circumferential direction of the phosphor 12 at a same space. The number of the linear cathodes is not particularly limited. The material for the linear cathodes 13 may be a metal excellent in electron emission property.

In order to make the phosphor 12 emit light from its entire surface by electron impact, the space between the linear cathodes 13 and the phosphor 12 is increased to make it possible to apply high potential or the number of linear cathodes 13 is increased to narrow the space between the adjacent linear cathodes in the circumferential direction of the phosphor 12.

A spacer 14 is used for setting the separation space between the phosphor 12 and the linear cathodes 13 to a predetermined distance. The spacer 14 is composed of a pair of ring members 14a fitted to the outside of both ends of the phosphor 12 and plural projecting members 14b provided at each ring member 14a at a required space in the circumferential direction and facing outward in the diameter direction.

The linear cathode 13 is bridged between the projecting members 14b of each spacer 14 at both ends of the phosphor 12 and arranged to have a predetermined space in the diameter direction with respect to the surface of the phosphor 12. Its ring member 14a may be adhered to the phosphor 12. The linear cathodes 13 may be arranged at the inner periphery of the glass tube 10a without using the spacer 14. When the spacer 14 is not used for arranging the linear cathodes 13, it is preferable that the inner diameter of the glass tube 10a is made small for arranging the linear cathodes 13. Each of the linear cathodes 13 is electrically connected to each other by an annular conductor 15. A pulse power source 17 is connected between the anode 11 and one end of the linear cathode 13 via an electric wire 16.

In the lighting device 1 having the above-mentioned configuration, when positive voltage, for example, positive pulse voltage is applied to the anode 11 from the pulse power source 17, an electric field concentration is strongly generated at the electron emitter 29 on the surface of the concave/convex (concave sections 21 and convex sections 22) of the conductor wire 20 composing the linear cathodes 13, whereby electrons are drawn out and emitted from the electron emitter 29. The emitted electrons are accelerated by the anode 11 to electron-collide with the phosphor 12, that makes the phosphor 12 emit light. This allows the lighting device 1 to light. This lighting device does not require a gate for drawing out electrons from the electron emitter 29. This is because electric field can strongly be concentrated on the concave/convex formed on the surface of the conductor wire 20 of the linear cathode 13. This makes it possible to simplify the construction of the lighting device 1 as well as facilitate the application of voltage and its control. Further, the gate is not required to be provided inside, whereby the vacuum envelope 10 can have a shape of a more slender tube.

In the lighting device 1, the concave/convex shapes are formed uniformly on the outer peripheral surface of the conductor wire 20 in the longitudinal direction, thereby being capable of increasing and equalizing the generation density of carbon nano-tube that is the electron emitter 29 in the longitudinal direction. This makes it possible to equalize the emission intensity or emitted amount of electrons emitted from the electron emitter 29, thereby being capable of uniformly emitting illumination light with high intensity over the vacuum envelope 10 in the longitudinal direction.

A manufacturing method of the linear cathode 13 will be explained.

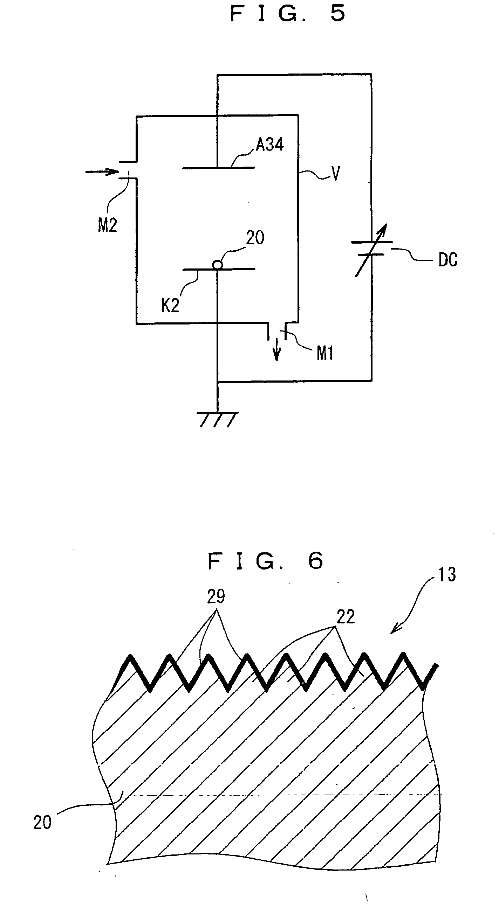

Firstly, a threading of M1 is performed to, for example, the hollow conductor wire 2 0 made of Ni and having an outer diameter of 1 mm to thereby form a concave/convex composed of valleys 21 and mountains 22. In this embodiment, a threading of M1 coarse pitch thread is performed, wherein the outer diameter is 1 mm, pitch is 0.25 mm and the diameter of the valley is 0.729 mm. Subsequently, carbon nano-tube as the electron emitter is formed by using a DC plasma CVD device shown in Fig. 5 with respect to the conductor wire 20 made of Ni and subjected to the threading of M1.

In the aforesaid DC plasma CVD device, a cathode electrode plate K2 and an anode electrode plate A34 made of Mo metal are arranged in a vacuum chamber V so as to oppose to each other in the vertical direction to thereby form a plane-parallel electrode, wherein necessary DC voltage of 700 V, for example, is applied between the anode electrode plate A34 and the cathode electrode plate K2 from a DC power source. The vacuum chamber V is provided with an air outlet M1 not shown to which the vacuum pump is connected and a gas feeding port M2 from which material gas is fed.

The threaded conductor wire 20 is placed on a substrate not shown on the cathode electrode plate K2. Mixed gas of hydrogen and methane or mixed gas of hydrogen and carbon oxide is used as the material gas. The material gas is introduced from the gas feeding port M2 into the vacuum V. DC voltage is applied between the anode electrode plate A34 and the cathode electrode plate K2 from the DC power source, whereby plasma of high temperature, such as approximately 600 °C to 1000 °C, is produced in the vacuum chamber V. The conductor wire 20 is exposed to the high-temperature plasma, whereby carbon nano-tube or carbon nano-wall is film-formed on the conductor wire 20. The carbon nano-tube or carbon nano-wall is grown to have a length of about several µm.

Fig. 6 is a partially enlarged sectional view showing the conductor wire 20 having the electron emitter 29 made of the carbon nano-tube 29 formed thereon, i.e., the linear cathode 13. On the concave/convex surface of the conductor wire 20, the generation of the core of the carbon nano-tube 29 is promoted particularly on the convex sections, whereupon the generated cores are coalescenyly grown to form the carbon nano-tube 29. This forms the carbon nano-tube 29 on the concave/convex surface of the conductor wire 20. The carbon nano-tube 29 is formed generally all over the circumference of the conductor wire 20 placed on the substrate except for the bottom surface side.

The concave/convex is formed on the linear conductor wire 20 by performing a threading as described above, so that it is possible to easily film-form carbon nano-tube serving as the electron emitter and having a great number of concaves and convexes, compared to a flat conductor wire having no concave/convex on its surface. Further, an electric field concentration occurs on the projecting leading end of the carbon nano-tube 29 at the screw thread22 to thereby promote the electron emission in the configuration of the lighting device, thereby enabling a low-voltage driving.

Specifically, like Figs. 1 to 3, the linear cathodes 13 each having an outer diameter of 1 mm and length of 10 cm were formed at a space of 3 mm with respect to aphosphor-coatedmetallic anode having an outer diameter of 2 mm and length of 10 cm, wherein pulse voltage of 6 kV (1 kHz) was applied under vacuum of 10⁻⁶ Torr. As a result, current of 1 mA/cm² flew to obtain emission luminance of 200,000 cd/m². In this embodiment, a threading corresponding to a screw of M1 prescribed by JIS (Japanese Industrial Standards) was carried out.

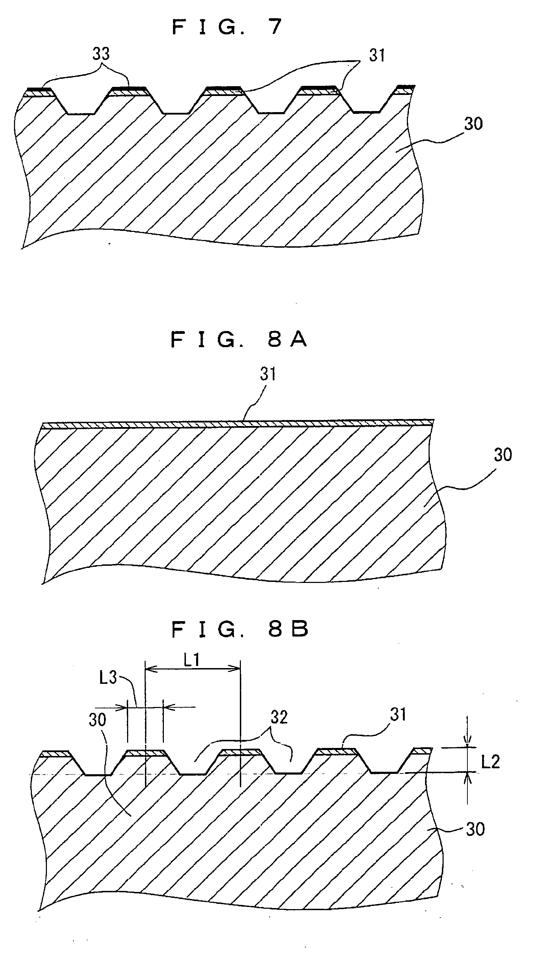

Fig. 7 is a sectional view showing another modified example of the linear cathode 13. As shown in Fig. 8A, the linear cathode has an Ni layer 31, serving as a catalyticmetal layer for promoting the growth of the carbon nano-tube, formed on the surface of a conductor wire 30 having an outer diameter of 1 mm and made of Cu so as to have a thickness of several µm with a technique of deposition or electrolytic metal plating. Then, grooves 32 having a spiral shape are formed on the surface of the conductor wire 31 as shown in Fig. 8B. Each groove 32 formed by a channeling has a pitch L1 of 0.2 mm, depth L2 of 0.11 to 0.15 mm and width of the projecting section L3 of 0.05 to 0.1 mm. These grooves 32 form concave/convex on the surface of the conductor wire 30. The projecting sections on which the grooves 32 are not formed are not cut by the channeling, so that the Ni layer 31 serving as the catalytic metal layer remains.

Carbon nano-tube that is the electron emitter is film-formed on the conductor wire 30 by using the DC plasma CVD device shown in Fig. 5. Upon film-forming the carbon nano-tube with the use of the DC plasma CVD device, the Ni layer 31 is present as shown in Fig. 7, so that the generation of cores is promoted at the projecting convex sections. The generated cores are coalescently grown to form the carbon nano-tube 33. According to this, the carbon nano-tube 33 is selectively formed on the conductor wire 30. Since the carbon nano-tube 33 is formed on the projecting convex section where the Ni layer 31 is present as shown in Fig. 7, an electric field is concentrated on the projecting leading end of the carbon nano-tube 33 in the configuration of the lighting device, thereby promoting the electron emission. Further, the carbon nano-tube 33 can selectively be formed on the Ni layer 31 where the groove is not formed, whereby the carbon nano-tube is not arranged with high density but arranged to have a suitable space, thereby being capable of obtaining satisfactory electron emission property.

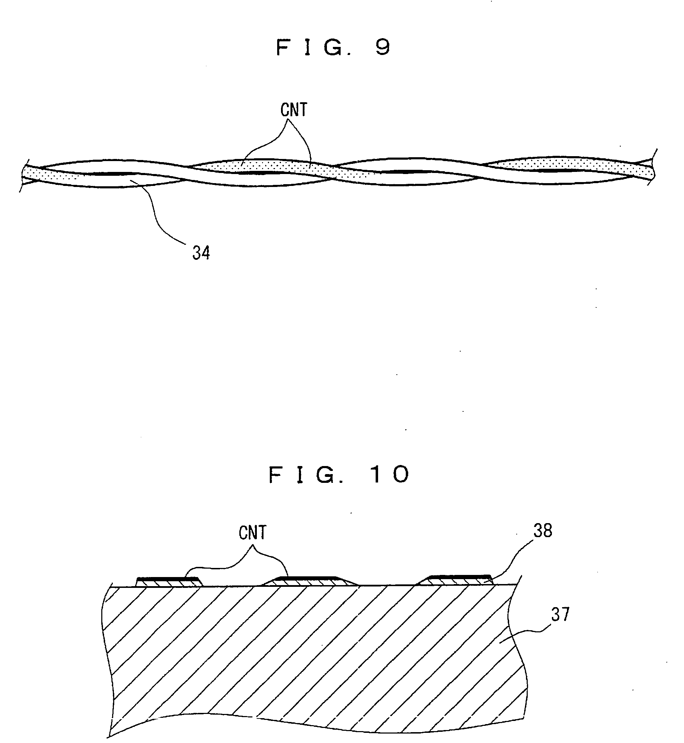

Fig. 9 shows still another modified example of the linear cathode. This linear cathode uses a linear material obtained by intertwining a conductor wire 34 made of Ni that is a catalytic metal and a conductor wire 35 made of Cu. A carbon nano-tube CNT that is the electron emitter is film-formed on this intertwined linear material by using the DC plasma CVD device shown in Fig. 5. Upon film-forming the carbon nano-tube by the DC plasma CVD device, the carbon nano-tube CNT is selectively formed on the Ni conductor wire 34 that is the catalytic metal, whereby the carbon nano-tube CNT is formed on the conductor wire 34.

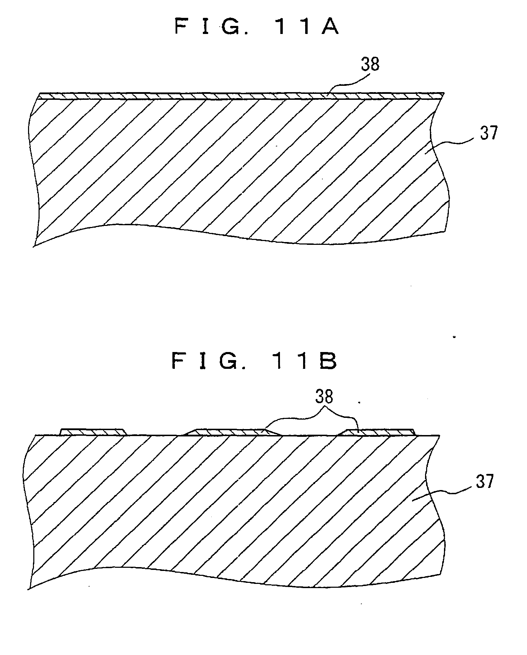

Fig. 10 shows still another modified example of the linear cathode. As shown in Fig. 11A, an Ni layer 38 is deposited as a catalytic metal layer for promoting the growth of the carbon nano-tube on a conductor wire 37 having an outer diameter of 1 mm and made of Cu. The thickness of the Ni layer 38 is, for example, 2 µm. Then, Ni 38 forming the Ni layer 38 is deposited like an island with a space by performing a heating process with high temperature as shown in Fig. 11B. The pattern of the deposition of Ni 38 can be varied depending upon the thickness of the Ni deposition film. Subsequently, carbon nano-tube that is the electron emitter is film-formed on the conductor wire 37 by using the DC plasma CVD device shown in Fig. 5. Upon film-forming the carbon nano-tube by the DC plasma CVD device, the carbon nano-tube CNT is formed on the Ni 38 that is the catalytic metal. Therefore, the carbon nano-tube CNT is selectively formed on the conductor wire 37.

The carbon nano-tube CNT can selectively be formed on the Ni 38, whereby the carbon nano-tube is not arranged with high density but arranged to have a suitable space, thereby being capable of obtaining satisfactory electron emission property.

It should be noted that concave sections may be formed on the surface of the conductor wire by pressing a fine leading end of a spicular member toward the conductor wire, or concave/convex may be formed on its surface by spraying fine grains on the conductor wire. The other carbon-based materials such as carbon nano-wall or diamond-like carbon may be film-formed to obtain the electron emitter. The electron emitter may be formed by a thermal CVD, RF plasma CVD, microwave plasma CVD or cathodic arc. The conductor wire may be formed into a ring shape serve as a ring-shaped light source.

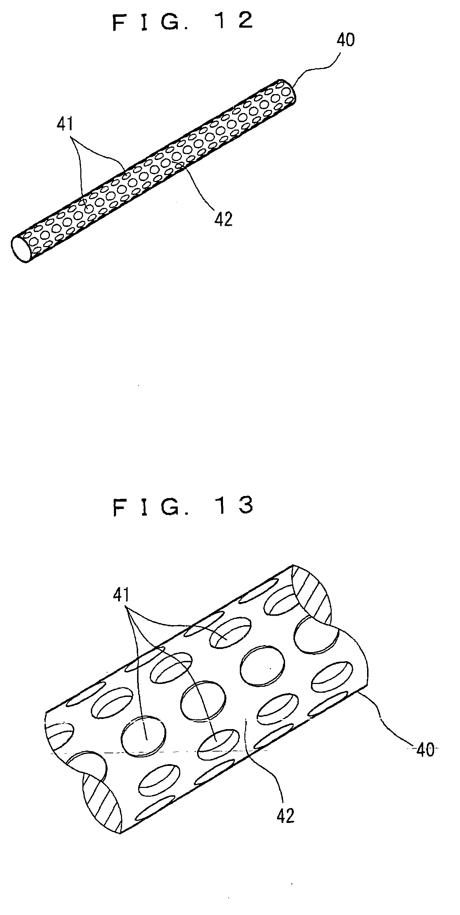

Still another modified example of the linear cathode will be explained with reference to Figs. 12 to 14. Microscopic linear materials prepared in advance are dispersed in a solvent to prepare slurry. Examples of carbon-based solvent include turpentine oil, camphor oil, pine oil, animal or vegetable oil (coconut oil, palm oil) or the like. A linear material made of tungsten and having an outer diameter of about 1 mm is used as the conductor wire 40 on which a carbon film is formed. A great number of concave sections 41 are formed on the surface of the conductor wire 40, and the remaining sections are defined as projecting section 42. The conductor wire 40 is not limited to the linear material, but a plate material or the like may be used. Further, the material is not limited to tungsten, but Ni, stainless, Fe or the like may be used.

Subsequently, the slurry is coated on the surface of the conductor wire 40. A great number of concave sections 41 are formed on the surface of the conductor wire 40, so that the slurry enters the concave sections 41 by coating the slurry onto the surface of the conductor wire 40. Therefore, the entire surface of the conductor wire 40 is coated with the slurry. With this state, the slurry on the surface of the conductor 40 is blown off by air or shaken off by vibration or other methods to remove only the slurry attached onto the projecting sections 42. According to this, the slurry is left on only the concave sections 41.

Then, the conductor wire 40 on which the slurry is coated is annealed to solidify the carbon-based solvent, thereby forming carbide 44 at the base section of the microscopic linear materials 43. This allows the microscopic linear materials 43 to chemically bond to the surface of the conductor wire 40. As described above, the microscopic linear materials 43 are formed on only the concave sections 41 on the surface of the conductor wire 40, thereby being capable of selectively forming the carbon-based film.

According to the film-forming method of the carbon-based film having the above-mentioned construction, a carbon-based film can easily be formed on the concave/convex surface of the conductor wire 40, thereby being suitable for mass production. The carbon-based film can selectively be formed only on the concave section 41 on the surface of the conductor wire 40 , whereby the film-forming sections of the carbon-based film are set in advance to efficiently form the carbon-based film on the required sections.

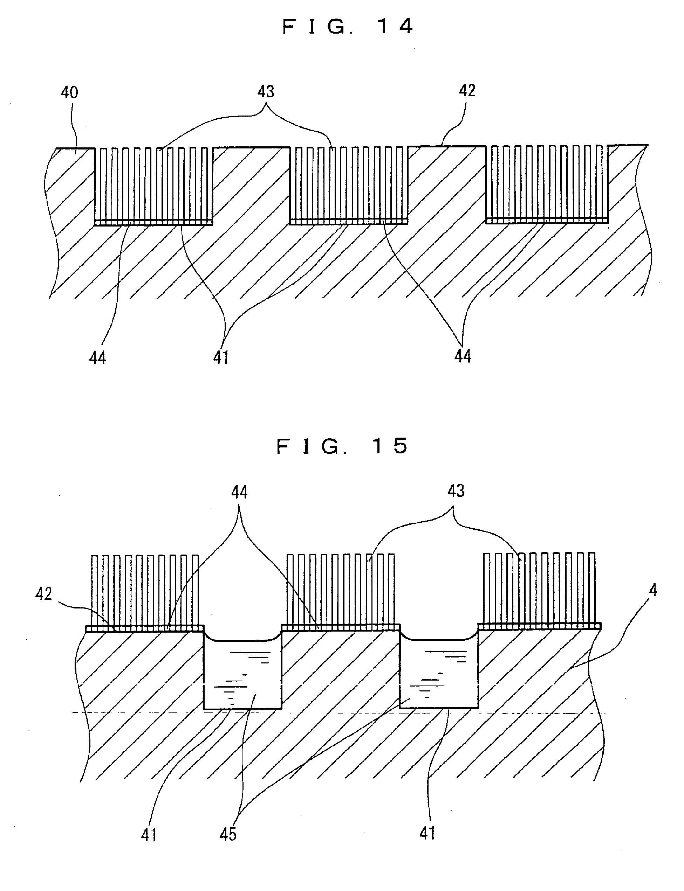

Still another modified example of the linear cathode will be explained with reference to Fig. 15. A concave/convex is formed on the surface of the conductor wire 40. The concave sections 41 is filled with water 45. Slurry obtained by dispersing microscopic linear materials into carbon-based solvent is coated on the surface of the conductor wire 40. The slurry is coated on only the projecting sections 42 due to the water-repellent effect of the water 45. Then, the conductor wire 40 having the slurry coated thereon is annealed. This allows a carbon-based film 44 to be formed on the base section of the microscopic linear materials 43. As described above, the microscopic linear materials 43 are formed on only the projecting sections 42 on the surface of the conductor wire 40. It may be possible that the concave/convex is not formed on the surface of the conductor wire 40 and the carbon-based film is formed all over the surface of the conductor wire 40.

The embodiment of the present invention can be applicable as a method for forming a carbon film on a linear material used as a linear light source such as a thin-sized lighting device or display device or a backlight of a liquid crystal display device.

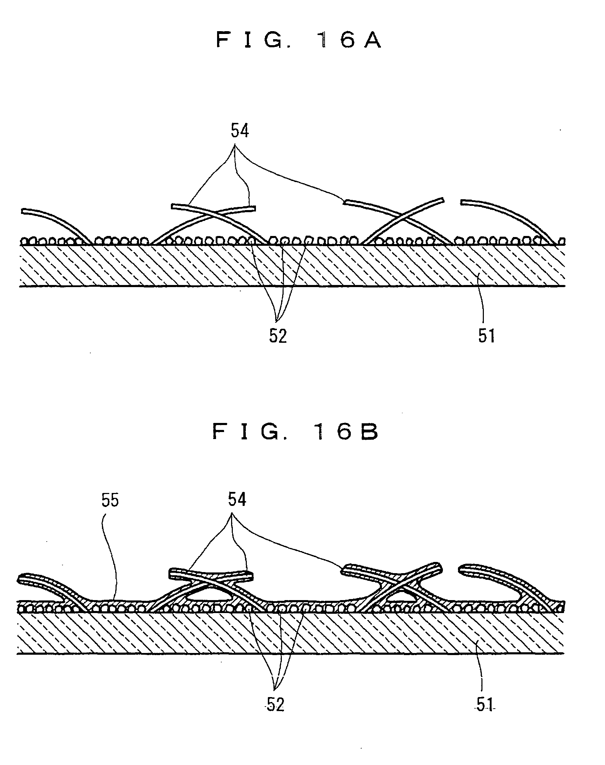

Still another modified example of the linear cathode will be explained with reference to Fig. 16. The arrangement space of the microscopic linear materials such as carbon nano-tube or the like is controlled, whereby the linear cathode has satisfactory electron emission property. The linear cathode has an electron conductive film on a conductor wire obtained by interspersing the microscopic linear materials into ultrafine grains. Ultrafine grains include metal, graphite or diamond. The microscopic materials are microscopic, slender substances having a linear shape or curved shape. Each of the microscopic linear materials has a section of circle, ellipse, rectangle, polygon or other shape. Each of themicroscopic linear materials has high aspect ratio and a size longer than the size of the ultrafine grains. Usable substrates include a metallic substrate, plastic substrate or ceramic substrate. The conductor wire is preferably made of a metal having a diameter for which the ultrafine grains and microscopic linear materials can be arranged. It is preferable that the microscopic linear materials have carbon as a main component and have a high aspect ratio. A high aspect ratio of 1 to several hundreds is preferable, and a high aspect ratio of 5 to 100 is more preferable. The microscopic linear materials are preferably composed of at least one of carbon nano-tube, carbon nano-wall, carbon fiber, graphite fiber, amorphous carbon fiber and diamond fiber. The carbon nano-tube or the like has a high aspect ratio, so that the electric field is easy to be concentrated and electrons can be emitted with relatively low voltage. Further, its lifetime is long. The microscopic linear materials preferably have a size longer than the size of ultrafine grains. Interspersing intentionally the microscopic linear materials having a size longer than the size of ultrafine grains with respect to ultrafine grains provides that the leading end of the longer microscopic linear materials projects higher on the substrate or on the conductor wire than the ultrafine grains. Therefore, the electric field is concentrated on this section to thereby emit electrons, thereby being capable of realizing an electron emission device having uniform and high electron emission site density according to a design. It is preferable that the size of each ultrafine grain is a hundred nanometer-orders to micrometer-order, the length of each microscopic linear material is micrometer-order to ten micrometer-orders and the diameter of each microscopic linear material is nanometer-order to hundred nanometer-orders. Further, it is preferable that the thickness of the electron conductive film is nanometer-order to hundred nanometer-orders. A range of from hundred nanometer-orders to micrometer-order means the range from 100 nm to 9 µm. A range frommicrometer-order to ten micrometer-orders means a range from 1 µm to 99 µm. A range from nanometer-order to hundred nanometer-orders means a range from 1 nm to 999 nm.

The manufacturing method of the field electron emission device includes a first step of arranging microscopic linear materials and ultrafine grains on a substrate or conductor wire with the microscopic linear materials interspersed into the ultrafine grains and a second step of forming an electron conductive film on the substrate or conductor wire on which the microscopic linear materials and ultrafine grains are arranged with the microscopic linear materials interspersed into the ultrafine grains.

According to the embodiment, the microscopic linear materials are interspersed into the ultrafine grains to be arranged on the substrate or on the conductor wire to form the electron conductive film. The microscopic linear materials each having a required length are interspersed into the ultrafine grains each having a required size, with the result that the arrangement space of themicroscopic linear materials that become an electron emission site can be controlled. Therefore, the present invention avoids the close-packed arrangement such as the carbon nano-tube in the conventional example, thereby being capable of realizing an electron emission device having uniform and high electron emission density. It is preferable that the first step includes a step of coating colloidal solution in which microscopic linearmaterials are interspersed into the ultrafine grains on the substrate or conductor wire or a step of dipping the substrate or conductor wire into the colloidal solution. It is preferable that the length of each microscopic linear material is greater than the size of each ultrafine grain. Interspersing intentionally the microscopic linear materials having a size longer than the size of ultrafine grains with respect to ultrafine grains provides that the leading end of the longer microscopic linear materials projects higher on the substrate or on the conductor wire than the ultrafine grains. Therefore, the electric field is concentrated on this section to thereby emit electrons, thereby being capable of realizing an electron emission device having uniform and high electron emission site density according to a design. It is preferable that the length of each microscopic linear material is greater than the size of each ultrafine grain. As shown in Fig. 16A, microscopic linear materials 54 are interspersed into ultrafine grains 52 on the surface of a conductor wire 51. Each of the ultrafine grains 52 has a specific size within hundred nanometer-orders to micrometer-order, e.g., has an average particle diameter of several hundred nm. The ultrafine grains are washed, purified and dispersed, and the dispersion is centrifugally separated. An alcohol is added to the supernatant colloidal solution to adjust the total mount. Further, hydrogen fluoride is added to perform a centrifugal separation, whereby the supernatant solution is defined as fine-grain colloidal solution. The microscopic linear materials are mixed and dispersed into the fine-grain colloidal solution. Then, the conductor wire or substrate is dipped into the treated solution for several minutes , and dried, resulting in that the microscopic linear materials 54 are interspersed into the ultrafine grains 52 to be arranged onto the conductor wire or substrate as shown in Fig. 16B. It shouldbe noted that the treated solutionmaybe dropped or sprayed as the conductor wire or substrate 51 is rotated.

Subsequently, an amorphous carbon film (DLC) 55 that is an electron conductive film is formed at low temperature by using the CVD method in a thickness of several 100 nm, obtaining a field electron emission device as shown in Fig. 16B. This amorphous carbon film 55 makes a mechanical and electrical connection of the microscopic linear materials 54. The field electron emission device obtained by the above-mentioned manufacturing method is arranged as a cold cathode in a vacuum (approximately 10⁻⁷ Torr) so as to oppose to an anode having a phosphor coated thereon. Electrons are drawn out in the vacuum by the application of voltage and they collide with the phosphor to be excited to make the phosphor emit light. The carbon nano-tube that is one of the microscopic linear materials rises toward the anode when the electric field is concentrated, so that it is unnecessary to provide a special alignment for raising the carbon nano-tube upright. When the carbon nano-tubes each having a size longer than the size of ultrafine grains 52 are interspersed from the viewpoint of design, the carbon nano-tubes project higher than the other sections, so that the electric field is concentrated on the projecting carbon nano-tubes, thereby being capable of emitting electrons from the viewpoint of design. The number and space of the sections where the electric field is concentrated on can be designed and specified depending upon the mixed ratio of the carbon nano-tubes. Accordingly, the arrangement of the carbon nano-tubes can be controlled from the viewpoint of design. Arranging the carbon nano-tubes in a suitable space eliminates the close-packed arrangement of the carbon nano-tubes as in the conventional example. Therefore, satisfactory electron emission property can be obtained. The arrangement space between the carbon nano-tubes is preferably L to 3L with respect to the length L of each carbon nano-tube, considering a screening effect. In the electron emission device in this embodiment, the electric field is concentrated on the microscopic linear materials such as carbon nano-tubes interspersed in a space of several hundred nm between ultrafine grains such as a diamond having a size of several hundred nm to establish an electron emission site, with the result that electrons can be emitted. When emission current from some electron emission site is decreased, the electric field is concentrated on another electron emission site, which means there are a great number of sites acting as the electron emission source, whereby a long lifetime can be guaranteed.

Usable ultrafine grains include metallic ultrafine grains such as metal or nickel or graphite ultrafine grains (carbon ultrafine grains having high sp² component) , other than diamond. The substratemaybemade of a glass , plastics, silicon, ceramics, molybdenum or metal. Further, n+ silicon, graphite or metal having high electron conductivity is used for the substrate to make it a supply source of field emission electrons. A DLC film or graphite film having high SP² component or metallic film may be used for the electron conductive film. Usable CVD methods include a magnetomicrowave plasma CVD method. Moreover, a cathodic arc method, ion plating method or hot-filament method maybe used. Usable microscopic linearmaterials include carbon nano-wall, carbon fiber, graphite fiber, amorphous carbon fiber, diamond fiber or the like. Ultrafine grains having a different size can be additionally interspersed.

Still another embodiment of the present invention will be explained. The field electron emission device in this embodiment is configured by forming microscopic linear materials having electron conductivity on a substrate or conductor wire at a required arrangement. The required arrangement means the arrangement wherein microscopic linear materials are not closely packed and the arrangement, from the viewpoint of design, specified by the selection of the size of the ultrafine grains or the section to which activation is performed. In this embodiment, the microscopic linear materials having electron conductivity are formed on the substrate or conductor wire at a required arrangement, whereby the arrangement space between the microscopic linear materials serving as the electron emission site is controlled, thereby being capable of obtaining high and uniform electron emission density. The substrate or conductor wire may have electron conductivity. It is preferable that the substrate is made of metal , n-type silicon, graphite or the like. Moreover, the conductor wire is preferably a metal. Metallic grains or graphite grains are preferable for the ultrafine grains. The size of the ultrafine grains is micrometer-order to ten micrometer-orders. It is preferable that the ultrafine grains are seeded on the substrate or conductor wire.

According to the embodiment, the microscopic linear materials are formed on the ultrafine grains provided on the substrate or conductor wire. Therefore, using ultrafine grains having a required size such as micrometer-order from the viewpoint of design makes it possible to form the microscopic linear materials at a required arrangement corresponding to the size of the ultrafine grains. Accordingly, the arrangement space of the microscopic linear materials thatbecome an electron emission site can be controlled, thereby being capable of realizing the electron emission device having uniform and high electron emission density. The substrate or conductor wire has electron conductivity and the microscopic linear materials can be formed on a catalytic metal formed on the substrate or conductor wire. At least any one of Ni, Fe and Co can be selected as the catalytic metal.

In this embodiment, the microscopic linear materials are formed on the catalytic metal formedon the substrate or conductor wire. Therefore, the catalytic metal is formed like an island having a space, for example, whereby the microscopic linear materials can be formed like an island. Consequently, the arrangement space of themicroscopic linearmaterials thatbecome an electron emission site can be controlled, thereby being capable of realizing the electron emission device having uniform and high electron emission density. Such configuration is possible wherein the substrate or conductor wire has electron conductivity and the microscopic linear materials are formed on the section of the substrate or the conductor wire where the activation is performed. It is preferable for the activation that a scratch is formed on the substrate or conductor wire to activate the surface. The substrate or conductor wire is preferably made of at least any one of Ni, Fe and Co. Forming the microscopic linear materials on the section of the substrate or the conductor wire where the activation is performed makes itpossible to form the microscopic linear materials at a required arrangement. Accordingly, the arrangement space of the microscopic linear materials that become an electron emission site can be controlled, thereby being capable of realizing the electron emission device having uniform and high electron emission density.

The manufacturing method of the field electron emission device includes a step of arranging the ultrafine grains having electron conductivity on the substrate or conductor wire and a step of forming the microscopic linear materials having electron conductivity on the ultrafine grains. In the step of arranging the ultrafine grains on the substrate or conductor wire, it is preferable that colloidal solution of the ultrafine grains is applied to the substrate or conductor wire or the substrate or conductor wire is dipped into the colloidal solution. In this embodiment, the microscopic linear materials are formed on the ultrafine grains arranged on the substrate or conductor wire. Therefore, arranging the ultrafine grains having a required size such as micrometer-order from the viewpoint of design makes itpossible to form the microscopic linear materials at a required arrangement corresponding to the size of the ultrafine grains. Accordingly, the arrangement space of the microscopic linear materials that become an electron emission site can be controlled, thereby being capable of realizing the electron emission device having uniform and high electron emission density.

The manufacturing method of the field electron emission device includes a step of forming a catalytic metal on the substrate or the conductor wire like an island and a step of forming the microscopic linear materials having electron conductivity on the catalytic metal on the substrate or the conductor wire. In the step of forming the catalytic metal on the substrate or the conductor wire like an island, it is preferable that the catalytic metal is thinly formed on the substrate or the conductor wire, whereupon the resultant is heated at high temperature to deposit the catalytic metal like an island, or that the substrate or the conductor wire made of the alloy including the catalytic metal is heated at high temperature to deposit the catalytic metal on its surface like an island. According to this embodiment, the deposition is made on the substrate or the conductor wire like an island and the microscopic linear materials can be formed thereon. Accordingly, the microscopic linear materials that become an electron emission site are not close-packed, so that the arrangement space can be controlled, thereby being capable of realizing the electron emission device having uniform and high electron emission density.

The manufacturing method of the field electron emission device includes a step of performing activation on the substrate or the conductor wire and a step of forming the microscopic linear materials having electron conductivity on the section of the substrate or the conductor wire where the activation is performed. In this embodiment, the microscopic linear materials are formed on the section of the substrate or the conductor wire where the activation is performed. The activation is performed, for example, the scratches are formed so as to have a required arrangement, thereby being capable of forming the microscopic linear materials at a required arrangement. Consequently, the arrangement space of the microscopic linearmaterials thatbecome an electron emission site can be controlled, whereby the carbon nano-tubes are not arranged in a close-packed manner, thereby being capable of realizing the electron emission device having uniform and high electron emission density.

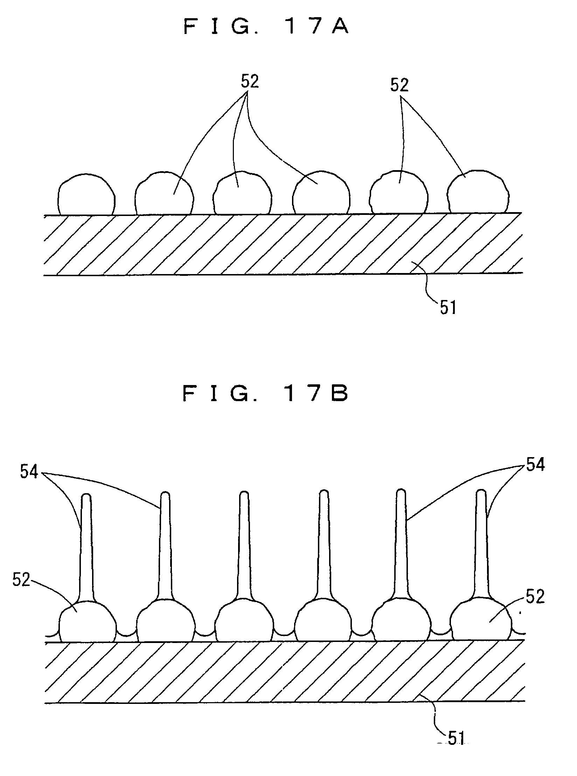

Fig. 17 is a view showing still another modified example of the linear cathode. As shown in Fig. 17A, ultrafine grains 52 having electron conductivity are arranged on a metallic substrate 51. Each of the ultrafine grains 52 has a specified size within a range of micrometer-order to tenmicrometer-orders , e.g., the average grain diameter is several µm. The ultrafine grains 52 are washed, purified and dispersed, and the dispersion is centrifugally separated. An alcohol is added to the supernatant colloidal solution to adjust the total mount. Further, hydrogen fluoride is added to perform a centrifugal separation, whereby the supernatant solution is defined as treated solution that is the fine-grain colloidal solution.

The metallic substrate 51 is dipped into this treated solution for several minutes, and then, dried, resulting in that the ultrafine grains 52 can be formed and arranged on the metallic substrate 51 at a space of several µm. The treated solution may be dropped or sprayed as the metallic substrate 51 is rotated. The ultrafine grains 52 are suspended in the colloidal solution such that they are not collected but dispersed in a form of generally a single grain. Therefore, the single grains are arranged and formed on the metallic substrate 51 by treating the metallic substrate 51 with the colloidal solution.

Subsequently, as shown in Fig. 17B, the microscopic linear materials 54 are selectively formed on the ultrafine grains 52 by a DC plasma CVD method. The selective growth of the microscopic linear materials 54 on the ultrafine grains 52 can be explained by a crystal growth theory.

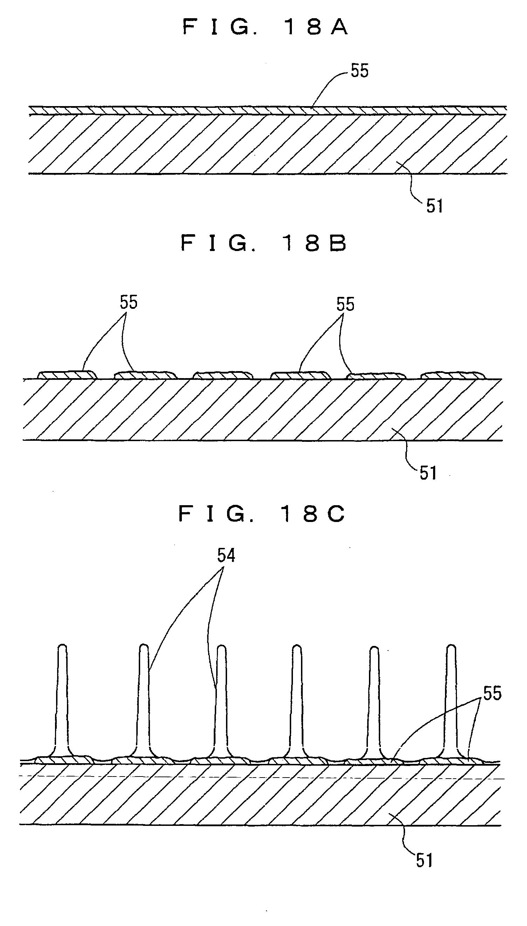

As shown in Fig. 18A, an Ni thin film 55, for example, is deposited on the metallic substrate 51 as a catalytic metal for promoting the growth of the microscopic linear materials. Then, the resultant is heated at high temperature, whereby Ni is deposited like an island at a suitable space as shown in Fig. 18B. Subsequently, as shown in Fig. 18C, the microscopic linear materials 54 are selectively grown on the Ni 55 that is deposited like an island and serves as the catalytic metal with the CVD method. As described above, the microscopic linear materials are selectively formed on the catalytic metal deposited on the metallic substrate 51 like an island, whereby the microscopic linear materials 54 are not arranged in a close-packed manner, thereby being capable of obtaining satisfactory electron emission property.

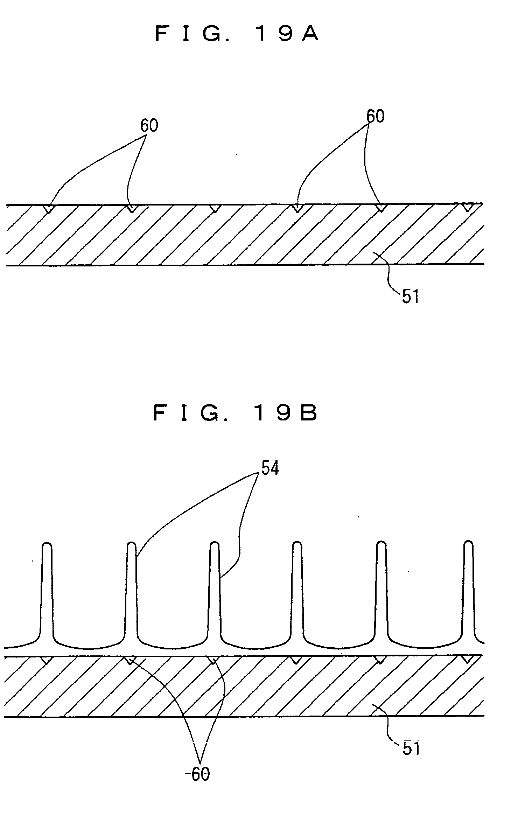

It should be noted that the following configuration is also possible. Specifically, as shown in Fig. 19A, scratches 60 are formed as the activation at the required sections on the metallic substrate 51 to expose the activated surface of the Ni substrate 51. Then, the microscopic linear materials 54 are selectively formed at the sections where the scratches are formed with the CVD method. Therefore, the arrangement of the microscopic linear materials 54 that emit electrons due to the electric field concentration can be controlledfrom the viewpoint of design. Accordingly, satisfactory electron emission property can be obtained by arranging the microscopic linear materials 54 at a suitable space.

## Claims

1. A field electron emission device comprising:
a linear conductor wire having concave/convex on its surface; and
an electron emitter having electron conductivity formed on the concave/convex surface of the conductor wire.

2. A field electron emission device as claimed in claim 1, wherein the concave/convex is formed by performing a channeling to the surface of the conductor wire.

3. A field electron emission device as claimed in claim 1, wherein the concave/convex is formed by setting a surface roughness of the surface of the conductor wire.

4. A field electron emission device comprising:
a linear material obtained by intertwining plural lines,
wherein the plural lines include a conductor wire of a catalytic metal serving as a catalyst for forming the electron emitter, and
the electron emitter having electron conductivity is formed on the conductor wire of the catalytic metal.

5. A field electron emission device as claimed in any one of claims 1 to 4, wherein
the electron emitter is composed of microscopic linear materials composed of selected one or combination of carbon nano-tube, carbon nano-wall, carbon fiber, graphite fiber, amorphous carbon fiber and diamond fiber.

6. A lighting device comprising:
a vacuum envelope whose inside is vacuum-sealed;
a phosphor-coated anode arranged in the vacuum envelope; and
a linear cathode arranged so as to oppose to the phosphor-coated anode at a space, wherein
the linear cathode is composed of a field electron emission device comprising a linear conductor wire having concave/convex on its surface and an electron emitter having electron conductivity formed on the concave/convex surface of the conductor wire.

7. A lighting device as claimed in claim 6, wherein the vacuum envelope is a vacuum-sealed tube having a longitudinal shape.

8. A lighting device as claimed in claim 6 or claim7, wherein the electron emitter is composed of microscopic linear materials composed of selected one or combination of carbon nano-tube, carbon nano-wall, carbon fiber, graphite fiber, amorphous carbon fiber and diamond fiber.

9. A lighting device as claimed in any one of claims 6 to 8, wherein the vacuum envelope is composed of a straight-tube glass tube, the phosphor-coated anode is disposed along the longitudinal direction of the vacuum envelope and the linear cathode is arranged so as to oppose to the phosphor-coated anode along the longitudinal direction.

10. A lighting device comprising:
a vacuum envelope whose inside is vacuum-sealed;
a phosphor-coated anode arranged in the vacuum envelope; and
a linear cathode arranged so as to oppose to the phosphor-coated anode in the vacuum envelope, wherein
the linear cathode has a linear conductor wire having concave/convex on its surface and an electron emitter formed on the concave/convex surface of the conductor wire, wherein
the electron emitter is arranged on the concave/convex surface of the conductor wire such that carbon-based microscopic linear materials are interspersed into ultrafine grains and an electron conductive film is formed.

11. A lighting device as claimed in claim 10, wherein the microscopic linear materials are composed of at least one of carbon nano-tube, carbon nano-wall, carbon fiber, graphite fiber, amorphous carbon fiber and diamond fiber.

12. A lighting device as claimed in claim 10 or claim 11, wherein the length of each of the microscopic linear materials is greater than the size of each of the ultrafine grains.

13. A lighting device as claimed in any one of claims 10 to 12, wherein the size of each of the ultrafine grains is fromahundrednanometer-orders to amicrometer-order, the length of each of the microscopic linear materials is from micrometer-order to ten micrometer-orders and the diameter of each of the microscopic linear materials is from nanometer-order to a hundred nanometer-orders.

14. A lighting device as claimed in claim 10, wherein the microscopic linear materials are formed on the conductor wire at a required arrangement.

15. A lighting device as claimed in claim 10, wherein the microscopic linear materials are formed on the ultrafine grains having electron conductivity and arranged on the conductor wire.

16. A lighting device as claimed in claim 10, wherein the microscopic linear materials are formed on a catalytic metal formed on the conductor wire.

17. A lighting device as claimed in claim 16, wherein the catalytic metal is composed of at least one of Ni, Fe and Co.

18. A lighting device as claimed in claim 10, wherein the microscopic linear materials are formed at sections on the conductor wire where activation is performed.

19. A lighting device as claimed in claim 10, wherein the conductor wire is composed of at least one of Ni, Fe and Co.
